# EUROPEAN PATENT SPECIFICATION

(11) **EP 1 433 507 B1**
(45) Date of publication and mention of the grant of the patent: **24.08.2011**
(21) Application number: 03104826.7
(22) Date of filing: 19.12.2003
(51) Int. Cl.: A63F 13/10, G10H 1/00

(54) **Music game apparatus and electronic musical apparatus and computer programs therefor**
Gerät für Musikspiel und elektronisches Musikgerät und Computerprogramme hierfür
Appareil pour jeu musical et appareil musical éléctronique et logiciels correspondants

(30) Priority: 27.12.2002 JP 2002381271
(43) Date of publication of application: 30.06.2004
(73) Proprietor: YAMAHA CORPORATION, Hamamatsu-shi Shizuoka-ken (JP)
(72) Inventor: Ikeya, Tadahiko, Hamamatsu-shi Shizuoka-ken (JP)
(74) Representative: Kehl, Günther

(56) References cited:
- JP-A- 08 305 356
- US-A- 5 907 115
- US-A- 6 011 210
- US-B1- 6 268 557
- UNKNOWN: "Teach Me Piano, Deluxe - Interactive piano-teaching system" VOYETRA TURTLE BEACH INC, [Online] July 2001 (2001-07), XP002288032 Retrieved from the Internet: URL:ftp://ftp.voyetra.com/pub/voy/tp/tmp_m an.pdf> [retrieved on 2004-07-12]

## Description

The present invention relates to a music game apparatus which can be used as a machine for guiding the user on how to operate an electronic musical apparatus or as a game machine, an electronic musical apparatus which is capable of operating in response to operation of a music game executed by the music game apparatus, as well as computer programs for the apparatuses.

Conventionally, there has been known a music game apparatus that sequentially displays performance operators which should be operated as character images or the like with the progress of a piece of music to prompt the player to operate the performance operators of an electronic musical apparatus (such as an electronic keyboard instrument) (refer to Japanese Patent No. 3,058,051, for example). Briefly describing about the music game apparatus, specifically, images of performance operators, such as keys of a keyboard, are visually displayed on a display screen so that a human player or user can immediately know which of the keys should be depressed or operated, but also notes of a melody of a given music piece are displayed, for example, in character images of "apples" in such a manner that the "apples" sequentially fall down to a bottom portion of the display screen in accordance with a progression of the given music piece. As the player operates any one of the performance operators (e.g. keyboard keys) of the electronic musical instrument, connected with the music application apparatus, in accordance with the corresponding falling "apple" reaching a predetermined position on the display screen, an image of an "arrow" shot toward the falling "apple" is displayed on the screen. If the human player has operated the performance operator at proper timing, the "arrow" is displayed on the screen as having successfully hit the target "apple", and a score count is incremented accordingly. If, on the other hand, the human player has failed to operate the performance operator at proper timing, then the "arrow" is displayed on the screen as having successfully hit the target "apple", and a score count is incremented accordingly. If, on the other hand, the human player has failed to operate the performance operator at proper timing, then the "arrow" is displayed on the screen as having missed the target "apple" and, in this case, the score count is not incremented. In the disclosed music application apparatus, the above procedures are carried out as a kind of "music game". With the thus-arranged music application apparatus, the human player can readily learn how to use the functions of the electronic musical instrument connected with the music application apparatus, how to manipulate the performance operators for a desired music piece, etc. while enjoying the music game or music application.

In the US patent application 6,011,210 (A) a musical performance guiding device and method for musical instruments are disclosed. The document refers to an electronic musical instrument equipped with a performance guide function. More particularly, this citation discloses a device which processes in advance music piece performance data to create music piece data that includes note data preceding the music piece performance data and then reproduces the preceding music piece data to supply the thus-reproduced data to the electronic musical instrument. The above-mentioned device reproduces the music piece data to transmit the preceding note data to the electronic musical instrument, which in turn drives the guiding LED on the basis of the preceding note data.

The US patent 6,268,557 (B1) discloses a method and an apparatus for providing an interactive musical game, wherein an interactive electronic drum system and training techniques suitable for use in a coin-operated environment such as an arcade are described. Electronic drum pads, audio speakers, a visual display, training lights and an overall control system are combined to simulate the excitement of a live drum or interactive musical jam session for a user.

In the document "Teach Me Piano, Deluxe - Interactive piano-teaching system" Voyera Turtle Beach Inc, 'Online! July 2001 (2001-07), XP002288032 Retrieved from the Internet: URL:ftp://ftp.voyetra.com/pub/voy/tp/tmp-man.pdi>' retrieved on 2004-07-12! (pages 8 - 10, 78 - 82) an interactive piano-teaching system is described.

According to the above described prior art, the images of performance operators which should be operated by the player are sequentially displayed as character images such as apples on the display screen with the progress of a piece of music, but to actually operate the performance operators (e.g. keyboard) of the electronic musical apparatus at proper timing, the player has to temporarily look away from the performance operators (e.g. keyboard) and look at the display screen. This is very difficult for beginners who cannot operate the performance operators (e.g. keyboard) without looking away from them. To address this problem, it can be envisaged that an electronic musical apparatus with a guide function, such as an electronic musical instrument (i.e. electronic musical apparatus), which lights guide sections such as keyboard LEDs to guide the player on which keys (i.e. performance operators) should be operated, is connected to the music game apparatus, for playing the music game. In this case, the performance operators which should be operated are indicated by lighting the corresponding keyboard LEDs, and hence even beginners can recognize which keys should be operated at a first glance. According to the above descried prior art, the music game apparatus comprised of a personal computer and the electronic musical apparatus comprised of an electronic musical instrument which outputs MIDI signals and a tone generator are connected to each other via a MIDI interface. According to the prior art, however, in the case where an electronic musical apparatus having a guide function in which the performance operators and the tone generator are configured as an integral unit is employed as the electronic musical instrument, a variety of problems are encountered. For example, since note information such as note-on/off data transmitted form the music game apparatus and note information generated according to operation of any of the performance operators are supplied to the tone generator, it is difficult to discriminate whether a tone being sounded is based on the note information transmitted form the music game apparatus or the note information generated according to operation of any of the performance operator, i.e., it is difficult to recognize a mistake in performance. Further, the guide sections such as guide LEDs (hereinafter referred to as "keyboard LEDs") attached to a performance keyboard are lighted at proper performance timing to designate the performance operators which should be operated, and therefore, if the player operates any of the performance operators after checking that the corresponding guide section has been lighted, the timing is too late. Namely, there is always a delay in timing. Further, there may be a case where the guide sections respond to note information transmitted from the music game apparatus. In this case, the guide sections also respond to note information such as accompaniment parts for which a guide on performance is not provided, and the player is guided to operate performance operators irrelevant to the performance operators which should be operated to play a music game. This is very confusing.

It is therefore an object of the present invention to provide a music game apparatus which is capable of guiding the user on how to operate performance operators of an electronic musical apparatus in a way easy to understand, and solves the above described problems even in the case where the electronic musical apparatus is constructed such that performance operators and a tone generator are configured as an integral unit, and the electronic musical apparatus which is capable of operating in response to operation of a music game executed by the music game apparatus and providing a guide function.

To attain the above object, in a first aspect of the present invention, there is provided a music game system according to claim 1.

Advantageous embodiments of the game system can be implemented according to claims 2-11.

Further, in a second aspect of the present invention, there is provided a method of controlling a music game system according to claim 12.

Advantageous embodiments of the method can be implemented according to claims 13-16.

Further, the processor used in the present invention may comprise a dedicated processor with dedicated logic built in hardware, not to mention a computer or other general-purpose type processor capable of running a desired software program.

While the embodiments to be described herein represent the preferred form of the present invention, it is to be understood that various modifications will occur to those skilled in the art without departing from the spirit of the invention. The scope of the present invention is therefore to be determined solely by the appended claims.

The above and other objects, features, and advantages of the invention will become more apparent from the following detailed description taken in conjunction with the accompanying drawings.
FIG. 1 is a block diagram showing the hardware construction of a music game apparatus and an electronic musical apparatus according to an embodiment of the present invention;
FIG. 2 is a data flow diagram useful in explaining how MIDI messages are exchanged between the music game apparatus and the electronic musical apparatus when a music game is executed;
FIG. 3 is a flow chart showing a main process according to an embodiment of the present invention;
FIG. 4 is a flow chart showing a game process according to an embodiment of the present invention;
FIG. 5 is a flow chart showing a first preread process according to an embodiment of the present invention;
FIG. 6 is a flow chart showing a second preread process according to an embodiment of the present invention;
FIG. 7 is a flow chart showing a reception /return process according to an embodiment of the present invention; and
FIG. 8 is a flow chart showing a current read process according to the embodiment of the present invention.

The present invention will now be described in detail with reference to the drawings showing preferred embodiments thereof.

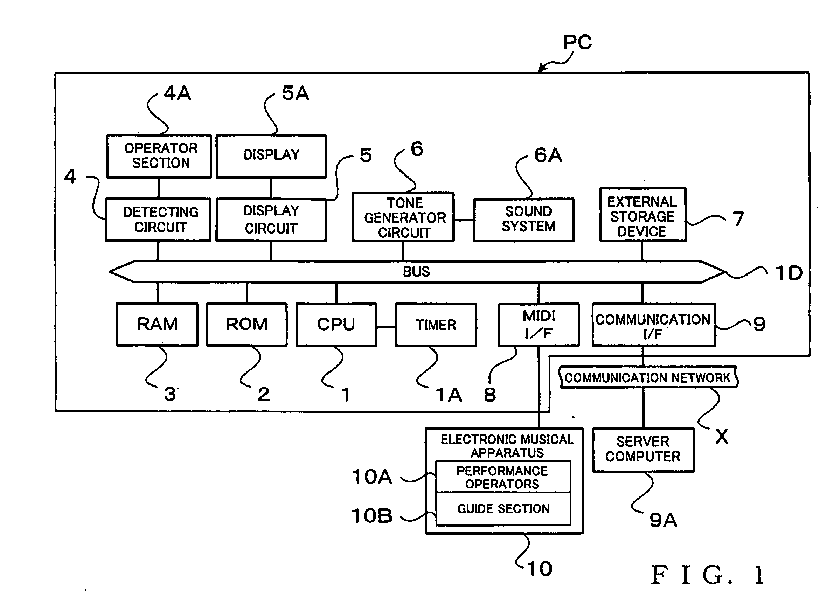

First, a brief description will be given of the entire construction of either one of a music game apparatus and an electronic musical apparatus according to the present invention. In FIG. 1, the part indicated by "PC" corresponds to an example of the hardware construction of the music game apparatus. The electronic musical apparatus 10 is identical in hardware construction with the music game apparatus PC, and hence description of the hardware construction of the electronic musical apparatus 10 is omitted, and only the hardware construction of the music game apparatus PC will now be described.

In the example shown in FIG. 1, the hardware of the music game apparatus is implemented by a personal computer (PC). By executing predetermined control programs realizing a music game (i.e. software programs for carrying out a main process, a game process, and so forth as described later), the personal computer (PC) carries out various kinds of processes such as a process for controlling the operation of guide sections 10B of the electronic musical apparatus 10 and a process for controlling the sounding operation of the electronic musical apparatus 10. It goes without saying that the above processes should not necessarily be carried out in accordance with computer software programs, but may be executed in accordance with microprograms processed by a DSP (Digital Signal Processor), and may be carried out by special hardware including a discrete circuit, an integrated circuit, a large-scale integrated circuit, or the like irrespective of programs to be used. It should be noted that the music game apparatus according to the present invention should not necessarily be implemented by the personal computer (PC), but may be implemented by an arbitrary product such as a game machine, a portable communication terminal such as a portable phone or a PDA (Personal Digital Assistant), a karaoke machine, or another kind of multimedia machine.

The music game apparatus appearing in FIG. 1 is controlled by a microcomputer which is comprised of a microprocessor unit (CPU) 1, a read-only memory (ROM) 2, and a random access memory (RAM) 3. The CPU 1 controls the overall operation of the music game apparatus. The ROM 2, the RAM 3, a detecting circuit 4, a display circuit 5, a tone generator circuit 6, an external storage device 7, a MIDI (Musical Instrument Digital Interface) interface (IF) 8, and a communication interface (I/F) are connected to the CPU 1. Further, a timer 1A which measures various time periods such as an interrupt time period in timer interrupt is connected to the CPU 1. For example, the timer 1A generates a clock pulse and transmits the same as a processing timing instruction or as an interrupting instruction to the CPU 1. The CPU 1 carries out various processes in accordance with such instructions.

The ROM 2 stores various control programs and various data which are executed or referred to by the CPU 1. The RAM 3 is used as e.g. a working memory for temporarily storing various data which is generated when the CPU 1 executes a predetermined program, or is used as a memory for storing a currently-executed control program and its related data. In the RAM 3, predetermined address areas are allocated to respective functions so that they can be used as a register, a flag, a table, a memory, and so forth. An operator section 4A is implemented by e.g. a tenkey unit for inputting numeric data, an alphanumeric keyboard for inputting character data, a mouse for use in operating a predetermined pointing device displayed on a display 5A, or a special switch, and all kinds of operators may be used as the operator section 4A insofar as they can be used as operators. The detecting circuit 4 detects the operation related status of the operator section 4A, and outputs switch information corresponding to the detected operation related status to the CPU 1 via a bus 1D. The display circuit 5 not only displays the same music game screen as in the previously described prior art on the display 5A implemented by a liquid crystal display (LCD) or a CRT (Cathode-Ray Tube), but also displays various kinds of information relating to a piece of music to be selected or used as a subject of a music game, the control status of CPU 1, and so forth on the display 5A.

The tone generator circuit 6 is capable of generating musical tone signals for a plurality of channels at the same time, and generates a predetermined musical signal (e.g. BGM or an effect sound such as a hit sound) based on music piece data and MIDI performance information (MIDI data) received via the bus 1D. The musical tone signal generated from the tone generator circuit 6 is sounded via a sound system 6A including an amplifier, a speaker, and so forth. The tone generator circuit 6 and the sound system 6A may be constructed in any known manner. For example, the tone generator circuit 6 may be based on various musical tone synthesis methods such as FM (Frequency Modulation), PCM (Pulse-Code Modulation), physical model, or formant synthesis, or may be implemented by special hardware or by software processed by the CPU 1. The external storage device 7 stores various kinds of data (such as music piece data), various control programs (such as the main process and the game process) to be executed by the CPU 1, and so forth. The control programs stored in the external storage device 7 are read into the RAM 3, so that the CPU 1 can be operated in the same manner as in the case where the control programs are stored in the ROM 2. Therefore, it is possible to easily add control programs and upgrade the version. Note that the external storage device 7 should not necessarily be implemented by a hard disk (HD), but may be implemented by any storage devices using various detachable external storage media such as a flexible disk (FD), a compact disk (CD-ROM or CD-RAM), a magneto-optical disk (MO), and a DVD (Digital Versatile Disk). Alternatively, the external storage device 7 may be implemented by a semiconductor memory or the like.

The MIDI interface (I/F) 8 provides interface for inputting MIDI data from and to the electronic musical apparatus 10 externally connected thereto to the music game apparatus PC, or outputting MIDI data from the music game apparatus PC to the electronic musical apparatus 10. Note that the MIDI interface 8 should not necessarily be implemented by a special MIDI interface, but may be implemented by a general interface such as an RS-232C interface, a USB (Universal Serial Bus) interface, or an IEEE 1394 interface. If such a general interface is used, MIDI messages and other data may be transmitted and received at the same time. The communication interface (I/F) 9 is connected to a wired or wireless communication network X such as a LAN (Local Area Network), the Internet, a telephone line, and is connected to a server computer 9A via the communication network X. The communication interface (I/F) 9 provides interface for taking control programs and various kinds of data from the server computer 9A into the music game apparatus PC. Namely, the communication interface (I/F) 9 is used for downloading control programs and various kinds of data from the server computer 9A when they are not stored in the external storage device 7 or the like. Although it is assumed that only a wired or wireless communication interface is used as the communication interface (I/F) 9 and/or MIDI interface 8, the present invention is not limited to this, but both a wired communication interface and a wireless communication interface may be used.

The electronic musical apparatus PC connected to the music game apparatus via the MIDI interface 8 may be implemented by any instrument insofar as it can generate MIDI data according to user's operations. The electronic musical apparatus 10 is provided with performance operators 10A of a keyboard type, a string instrument type, a wind instrument type, a wearable type, or the like in addition to the hardware component parts in FIG. 1 similar to those of a PC. Specifically, the performance operators 10A are configured like a keyboard, for example, which has a plurality of keys for selecting the pitch of a musical tone and is comprised of key switches corresponding to the respective keys. The performance operators 10A (e.g. keyboard) are not only used for performance of musical tones, but also used for inputting a piece of music which is to be used as a subject of a music game. Further, the electronic musical apparatus 10 is provided with the guide sections 10B such as keyboard LEDs corresponding to the respective keys, for guiding the user on which performance operators 10A should be operated, and can realize a guide function by providing control to turn on the keyboard LED corresponding to a keyboard LED ON/OFF command (MIDI message) given from the music game apparatus PC. It goes without saying that the music game apparatus PC (or the electronic musical apparatus 10) should not necessarily be constructed such that the operator section 4A, display 5A, tone generator circuit 6, and so forth are incorporated in the main body, but may be constructed such that they are configured as separate units and connected to each other via communication means such as MIDI interfaces or various types of networks.

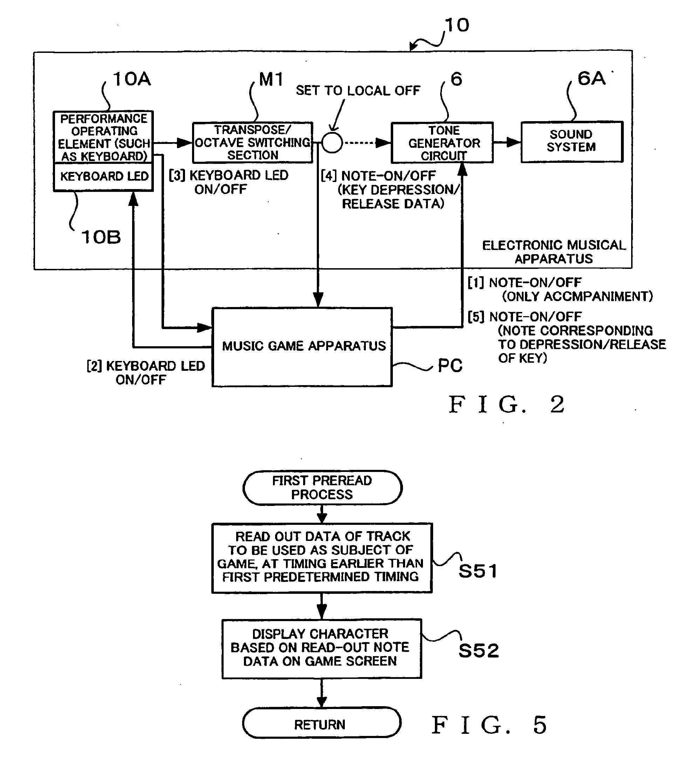

A brief description will now be given of control provided between the music game apparatus PC and the electronic musical apparatus 10 when a music game is executed. FIG. 2 is a data flow diagram useful in explaining the exchange of MIDI messages between the music game apparatus PC and the electronic musical apparatus 10. In the present embodiment, various control processes such as a process for controlling a guiding operation for the performance operators 10A and a sounding process based on operations of the performance operators 10A are carried out in accordance with predetermined MIDI messages defined in association with the respective control processes. In the following description, it is assumed that a music game is executed based on a melody line, i.e. a music game is executed in which a predetermined character image corresponding to a musical note constituting a melody falls from the top to the bottom on a display screen. It goes without saying that MIDI messages exchanged between the music game apparatus PC and the electronic musical apparatus 10 are not limited to data in FIG. 2. Also, it goes without saying that other data than MIDI messages may be exchanged. Note that in FIG. 2, an order in which data is exchanged is indicated by reference numerals [1] to [5] for the convenience of explanation.

First, the music game apparatus PC generates a music game screen corresponding to music piece data relating to a designated piece of music desired by the player, displays the generated music game screen on the display 5A, and transmits only an accompaniment-related note-on/note-off message (note information) to the electronic musical apparatus 10 ([1]). Then, the electronic musical apparatus 10 causes the tone generator circuit 6 thereof to carry out an accompaniment sounding process according to the note-on/note-off message, so that tones are sounded via the sound system 6A. This starts the execution of a music game accompanied by automatic accompaniment performance of the same tonal scale as that of the original music piece data. Upon the start of the music game, the music game apparatus PC transmits a keyboard LED ON/OFF command (guide information) to the electronic musical apparatus 10 according to the melody ([2]). In accordance with the keyboard LED ON/OFF command, the electronic musical apparatus 10 provides control to turn on/off the corresponding keyboard LED 10B. Namely, the electronic musical apparatus 10 provides display for guiding on which one of the performance operators 10A should be operated so as to play a note or notes of the melody. The keyboard LED ON/OFF command is comprised of, for example, data which is defined by a system exclusive message in a MIDI message. When the player operates any of the performance operators 10A, the electronic musical apparatus 10 generates and transmits a keyboard LED ON/OFF command corresponding to the operated performance operator 10A to the music game apparatus PC in the case where the electronic musical apparatus 10 is a type which supports the music game apparatus PC ([3]). Then, irrespective of whether the electronic musical apparatus 10 is a type which supports the music game apparatus PC, note-on/note-off data generated in the same manner as in the prior art according to the player's operation of the performance operator 10A is transmitted to the music game apparatus PC via a transpose/octave switching section M1 ([4]).

It should be noted that the keyboard LED ON/OFF command and the note-on/off data generated in response to the operation of the performance operator 10A are similar to each other in that they are indicative of the name of an operated key or a note, but they are different from each other in data format. Specifically, the note-on/off data is stored in a general data format, e.g. a MIDI note-on/off message data format, and the keyboard LED ON/OFF command is stored in a data format peculiar to the music game apparatus PC. Therefore, in the case where the electronic musical apparatus 10 is a type which supports the music game apparatus PC connected thereto, not only the note-on/off data but also the keyboard LED on/off command ([3]) can be generated in response to the operation of the performance operator 10A, but on the other hand, in the case where the electronic musical apparatus 10 is a type which does not support the music game apparatus PC connected thereto, the keyboard LED on/off command is not generated but only the note-on/off data is generated. It should be noted that the keyboard LED on/off command is also transmitted via a MIDI interface. Namely, the keyboard LED on/off command is transmitted in the form of a MIDI exclusive message.

Further, in the case where the electronic musical apparatus 10 is a type which supports the music game apparatus PC, the electronic musical apparatus is set to "Local Off" in advance through the operation of the music game apparatus PC, and hence even if the performance operator 10A is operated, the note-on/off data generated in response to the operation is not transmitted to the tone generator circuit 16. On the other hand, in the case where the electronic musical apparatus 10 is a type which does not support the music game apparatus PC, the note-on/off data generated in response to the operation of the performance operator 10A is transmitted to the tone generator circuit 16. Here, the note-on/off data which is transmitted to the tone generator circuit 16 contains musical instrument transpose and octave information, and hence it does not always correspond to the note (pitch) itself corresponding to the operated performance operator 10A. Therefore, if the electronic musical apparatus 10 is a type which does not support the music game apparatus PC, there may be a case where a different musical note from a note corresponding to the operated performance operator 10A is sounded. Namely, an improper musical tone may be sounded even when the player operates the performance operator 10A as guided.

In accordance with the received keyboard LED on/off command ([3]), the music game apparatus PC transmits the corresponding note-on/off message to the electronic musical apparatus 10 ([5]). The note-on/off message transmitted on this occasion does not contain musical instrument transpose and octave information, and hence it contains a note (pitch) itself corresponding to the operated performance operator 10A. Therefore, a tone which is controlled in sounding by the electronic musical apparatus 10 based on the note-on/off message has a note corresponding to the operated performance operator 10A.

It should be noted that in the case where the electronic musical apparatus 10 is a type which supports the music game apparatus PC, the music game apparatus PC provides control such that the music game is continued by proceeding to a note to be sounded next in the melody of the music piece data according to the received keyboard LED on/off command ([3]). On the other hand, in the case where the electronic musical apparatus 10 is a type which does not support the music game apparatus PC, the music game apparatus PC provides control such that the music game is continued by proceeding to a note to be sounded next according to the note-on/off data ([4]), because the electronic music apparatus 10 does not transmit the keyboard LED on/off command ([3]) to the music game apparatus PC.

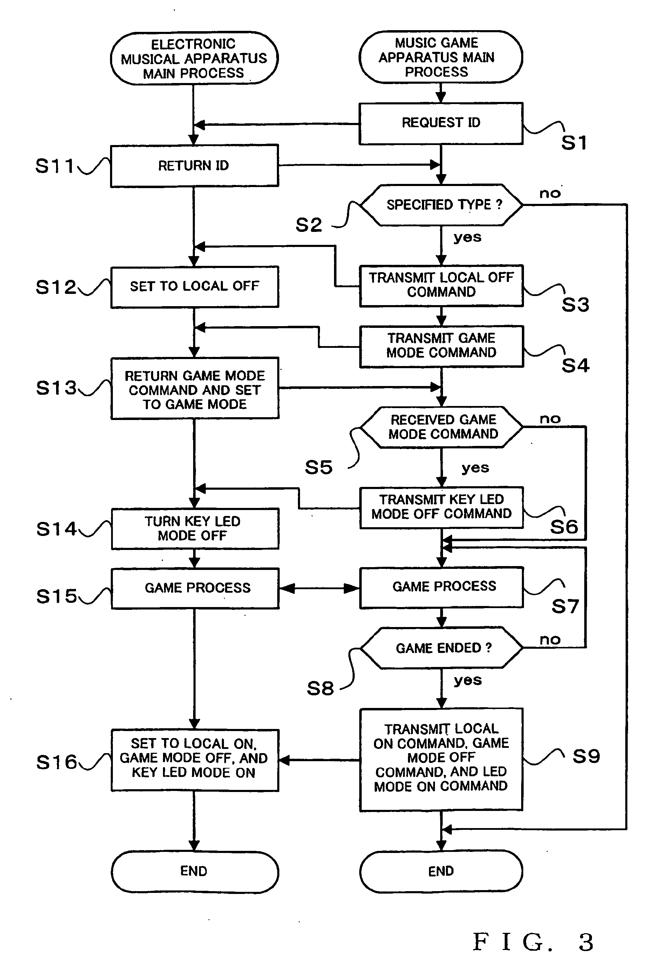

As described above, the music game apparatus PC and the electronic musical apparatus 10 proceed with a music game by transmitting and receiving MIDI messages to and from each other. In executing a music game, the guide section 10B for the performance operator 10A which should be operated next is operated at timing earlier than actual performance timing. Further, the note information transmitted from the music game apparatus PC and the note information generated from the electronic musical apparatus 10 are prevented from being redundantly transmitted to the tone generator circuit 16. Further, it is configured such that the guide sections 10B do not respond to the note information from the music game apparatus PC. Such processing is carried out by the respective CPUs 1 of the music game apparatus PC and the electronic music apparatus 10, which execute a predetermined program (software) realizing a music game process. A description will now be given of operations performed in the "music game process". First, the main process including the music game process will be described by referring to FIG. 3. FIG. 3 is a flow chart showing the main process according to an embodiment of the present invention. A description will now be given of processing performed in the main process with reference to the flow chart of FIG. 3.

First, the music game apparatus (hereinafter referred to as "the game apparatus") transmits an ID request to the electronic musical apparatus (hereinafter referred to as "the electronic musical instrument") (step S1). Upon receipt of the ID request, the electronic musical instrument returns a machine ID as an identifier, which is given in advance to the electronic musical instrument, to the game apparatus (step S11). It should be noted that some electronic musical apparatuses cannot interpret the ID request, and in this case, they do not return their machine IDs. The game apparatus determines whether or not the electronic musical instrument connected thereto is a specified type which supports various functions of the game apparatus (step S2). If determining that the electronic musical instrument is such a specified type ("YES" in the step S2), the game apparatus transmits a local-off command and a game mode command (steps S3 and S4). Upon receipt of the local-off command, the electronic musical apparatus 10 is set to "Local Off" (step S12) such that the note-on/off data generated according to the operation of the performance operator 10A is not directly transmitted to the tone generator circuit 16. Specifically, information for prohibiting the note-on/off data generated according to the operation of the performance operator 10A from being transmitted to the electronic musical instrument (namely, local-off information) is transmitted before the execution of a music game, so that the note-on/off message ([5]) transmitted from the game apparatus and the note-on/off data generated according to the operation of the performance operator 10A can be prevented from being redundantly supplied to the tone generator circuit 16.

Upon receipt of the game mode command, the electronic musical instrument is set to a game mode and returns the received game mode command as it is to the game apparatus. The electronic musical instrument set to the game mode is a specified type which supports a music game to be executed by the game apparatus as described above, and is configured to generate not only note-on/off data but also keyboard LED on/off commands according to the operation of the performance operators 10A during the execution of the music game. If the game apparatus receives the game mode command ("YES" in the step S5), it can be ascertained that the electronic musical instrument supports the music game mode, and hence the game apparatus transmits a key LED mode-off command (step S6). Upon receipt of the key LED mode-off command, the musical apparatus turns off a key LED mode (step S14). Specifically, before the execution of a music game, information for prohibiting the guide sections 10B for the performance operators 10A from being operated according to the note-on/off data (i.e., key LED mode-off command) is transmitted only to the electronic musical instrument which supports the music game, so that the guide sections 10B of the electronic musical instrument which supports the music game can be inhibited from responding to all the note-on/off data in music piece data including melodies and accompaniment transmitted from the game apparatus.

It should be noted that the key LED mode is a mode in which the keyboard LEDs (10B in FIG. 2) of the electronic musical instrument are turned on in response to note-on/off messages given from an external device outside the electronic musical instrument, and in an initial state, the electronic musical instrument is usually set to the key LED mode. The note-on/off message for sounding by the tone generator, which are given from the game apparatus to the electronic musical instrument, cause the keyboard LEDs to be turned on/off when the keyboard LED mode is on. If the electronic musical instrument is connected to the game apparatus, however, the keyboard LEDs are controlled to be turned on/off in accordance with keyboard LED on/off commands (2 in FIG. 2) as described above, and hence it is undesirable if the key LED mode is kept on. Therefore, the key LED mode is turned off, so that the keyboard LEDs can be inhibited from being controlled to be turned on/off according to the note-on/off messages supplied from the game apparatus.

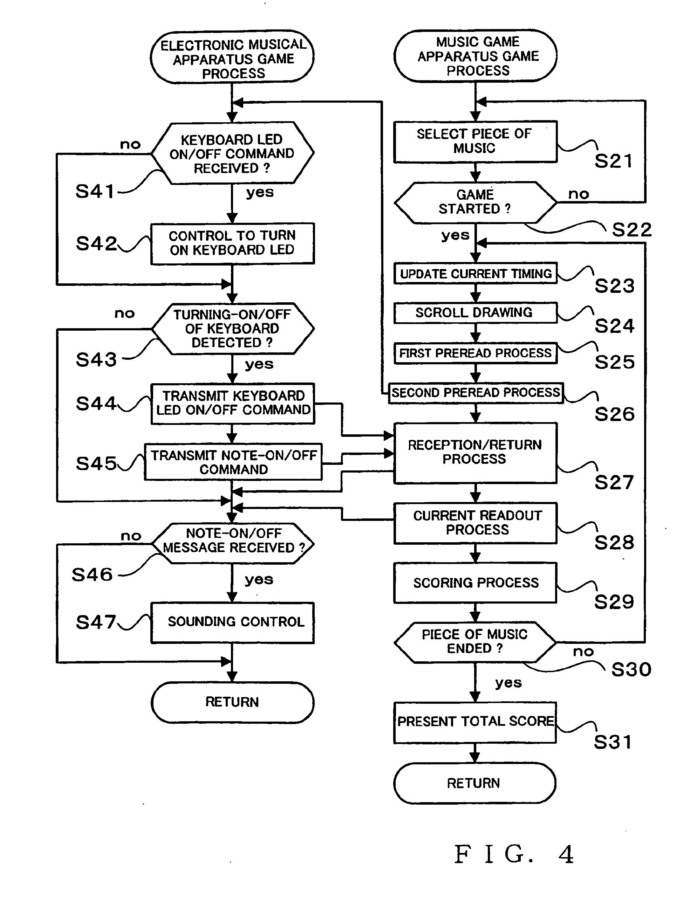

In steps S7 and S15, each of the electronic musical instrument and the game apparatus starts the game process. In the game process, the electronic musical instrument and the game apparatus transmit and receive various kinds of information to and from each other, and the electronic musical instrument provides various kinds of control to turn-on/off the keyboard LEDs and enable the tone generator to sound tones according to the received MIDI messages. The game apparatus carries out various processes such as description of a game screen, scoring for the music game, creation/transmission of MIDI messages for providing control to turn-on/off the keyboard LEDs and enable the tone generator to sound tones. The game process will be described later in further detail (refer to FIG. 4). If determining that the music game has been completed ("YES" in the step S8), the game apparatus transmits a local-on command, a game mode command, and a key LED mode-on command (step S9). In accordance with the type of the received command, the electronic musical instrument is set to "Local On", "Game Mode Off", or "Key LED mode ON" (step S16). Namely, the setting of electronic musical instrument is returned to the initial state.

Next, a description will be given of the "game process" (refer to the steps S7 and S15 in FIG. 3) carried out in the above described "main process". FIG. 4 is a flow chart showing the "game process" according to an embodiment of the present invention.

First, the game apparatus selects a piece of music which is to be used as a subject of the music game (step S21). Specifically, according to the selection of a piece of music by the user, the game apparatus reads out music piece data corresponding to the selected piece of music from a plurality of pieces of music stored in an external storage device or the like. In a step S22, it is determined whether an instruction for starting the music game has been given or not. If it is determined that the instruction for starting the music game has been given ("YES" in the step S21), the current timing is updated (step S23), scroll drawing is carried out (step S24), and a first preread process is carried out (step S25). FIG. 5 is a flow chart showing an example of the first preread process. In the first preread process shown in FIG. 5, note data of a tone to be generated at a predetermined timing is read out, at a pre-read timing preceding said predetermined timing by first predetermined pre-read time, from a track in which performance data (including note data) of the selected piece of music to be used as a subject of the music game is stored (step S51), and then, a character based on the read-out note data (the character assumes any form) is displayed on a game screen (step S52). Specifically, the scroll drawing and the first preread process are intended for displaying a new music game screen on the display. In the scroll drawing, only the oldest game screen (for example, a screen at the bottom on the display) among a plurality of game screens generated at predetermining timing in the first preread process is deleted and then all the remaining screens are shifted downward so as to update the music game screen displayed on the display according to the speed at which the music game is executed (for example, the tempo of music reproduction). Then, a game screen constituting part of the music game screen newly generated by the first preread process is displayed at the top on the display, so that the new music game screen is displayed on the display while being scrolled.

Referring again to FIG. 4, a second preread process is carried out in a step S26. The second preread process is intended for guiding the user on how to operate the performance operators 10A. Upon completion of the second preread process, the game apparatus transmits a keyboard LED on/off command (MIDI message) to the electronic musical instrument.

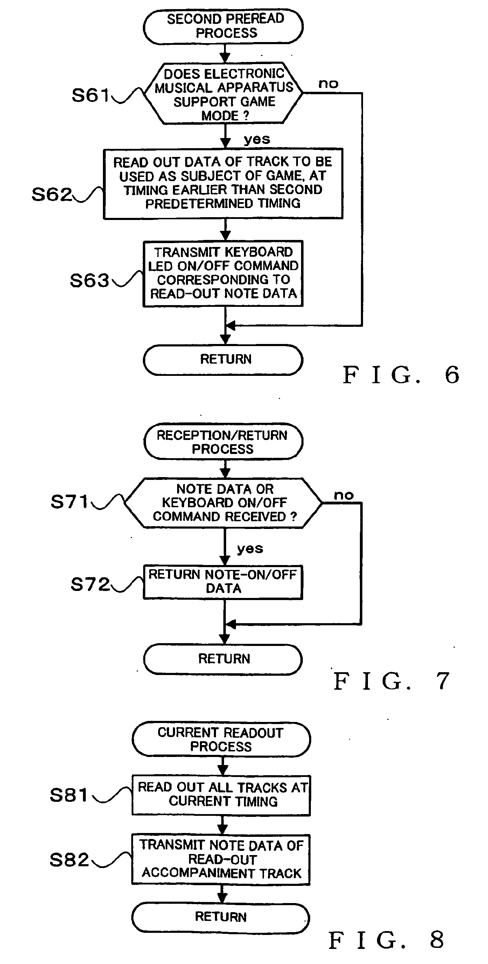

A description will now be given of the second preread process with reference to FIG. 6. FIG. 6 is a flow chart showing the second preread process according to an embodiment of the present invention.

In a step S61, it is determined whether the electronic musical instrument is a type which supports the game mode or not. If the determination result is positive ("YES"), performance data stored in the track of the selected piece of music to be used as a subject of the music game is read out from the track, at a pre-read timing preceding an original generation timing of the performance data by second predetermined pre-read time, e.g. a period of time corresponding to a crochet or an eighth note (step S62). Then, a keyboard LED on/off command corresponding to note data contained in the read-out performance data of the track to be used as a subject of the music game (e.g. a melody track) is transmitted to the electronic musical instrument (step S63). Specifically, the game apparatus transmits guide information (namely, keyboard LED on/off command) for operating the guide section 10B (namely, keyboard LED) for the performance operator 10A of the electronic musical instrument at timing earlier than timing at which the performance operator 10A should be actually operated (refer to [2] in FIG. 2). Therefore, the player can recognize the performance operator 10A which should be operated at timing earlier than timing at which the performance operator 10A should be actually operated. As a result, it is possible to provide a performance guide to beginners in a way easy to understand.

Referring again to FIG. 4, in the electronic musical instrument, it is determined whether a keyboard LED on/off command has been received from the game apparatus or not (step S41). If the determination result is positive ("YES" in the step S41), the corresponding keyboard LED is controlled to be turned on according to the command (step S42). In a step S43, it is determined whether the turning-on/off of any key in the keyboard (performance operators) has been detected or not. If the determination result is positive ("YES" in the step S43), the electronic musical instrument transmits the keyboard LED on/off command (step S44) and note-on/off data (step S45) to the game apparatus (refer to [3] in FIG. 2). The keyboard LED on/off command, however, is transmitted to the game apparatus only in the case where the electronic musical instrument is set to the game mode (refer to a step S13 in FIG. 3), and hence in the case where the electronic musical instrument is not set to the game mode, i.e. the electronic musical instrument is a type which does not support a music game, the keyboard LED on/off command is not transmitted to the game apparatus. The game apparatus carries out a reception/return process (step S27) and a current readout process (step S28). FIGS. 7 and 8 are flow charts showing respective examples of the reception/return process and the current readout process.

As shown in FIG. 7, in the reception/return process, it is determined whether note data (in the case where the electronic musical instrument does not support a music game) or a keyboard LED on/off command (in the case where the electronic musical instrument supports a music game) has been received or not (step S71). If the determination result is positive ("YES" in the step S71), a note-on/off message corresponding to the received note data or keyboard LED on/off command is returned to the electronic musical instrument (step S72). Here, the note-on/off message which corresponds to the keyboard LED on/off command and is returned to the electronic musical instrument does not reflect transpose information or the like (refer to [5] in FIG. 2).

It should be noted that in the case where the electronic musical instrument is a type which supports the game apparatus, both the keyboard LED on/off command ([3] in FIG. 2) and the note-on/off data ([4] in FIG. 2) are transmitted from the electronic musical instrument to the game apparatus in accordance with the operation of the performance operator 10A as described above. In this case, in the step S72, the note-on/off message is transmitted according to the keyboard LED on/off command. On the other hand, in the case where the electronic musical instrument is a type which does not support the game apparatus, only the note-on/off data ([4] in FIG. 2) is transmitted from the electronic musical instrument to the game apparatus in accordance with the operation of the performance operator 10A as described above. In this case, in the step S72, the note-on/off data ([4] in FIG. 2) received from the electronic musical instrument is directly transmitted as the note-on/off message.

On the other hand, in the current readout process as shown in FIG. 8, at step S81, data of all the tracks to be read out at current timing are read out. Then, at step S82, note data of accompaniment tracks among the read-out data are transmitted to the electronic musical instrument. The transmitted note data are delivered to the tone generator of the electronic musical instrument so that accompaniment tones should be generated (refer to [1] in FIG. 2).

Referring again to FIG. 4, in the electronic musical instrument, it is determined whether or not the note-on/off message has been received from the game apparatus (step S46). If the determination result is positive ("YES" in the step S46), sounding control is provided (step S47), followed by termination of the present process. Specifically, the received note-on/off message is transmitted to the tone generator, and sounding is performed according to the note-on/off message at a pitch which does not reflect transpose or the like (only in the case where the electronic musical instrument supports the game mode). On the other hand, the game apparatus carries out a scoring process (step S29). In the scoring process, in the case where the electronic musical instrument is a type which supports a music game, the read-out note event data of the track to be used as a subject of the music game is compared with the received keyboard LED on/off command ([3]) in terms of pitch and timing, and in the case where the electronic musical instrument is a type which does not support a music game, note event data read out from the track to be used as a subject of the music game is compared with the note-on/off data ([4]) in terms of pitch and timing, and for example, the score is added according to the comparison result. In a step S30, it is determined whether the piece of music to be used as a subject of the music game has ended or not. If the determination result is negative ("NO" in the step S30), the process returns to the step S23 to execute the steps S22 to S29 again. On the other hand, if the determination result is positive ("YES" in the step S30), the total score is presented to the player by showing it on the display or by sounding some effect sounds from the game apparatus (step S31), and then the present process is terminated.

It should be noted that in the game process shown in FIG. 4, according to the total score presented in the step S31, the player may be enabled to newly start a music game relating to another piece of music (e.g. when the player has made a high score), to play a music game for the same piece of music again, or to practice only part of the same piece of music where he/she has made a mistake (e.g. when the player has made a low score). Namely, the present invention may be employed as a music practice apparatus.

It should be noted that a performance data track to be used as a subject of a music game is not limited to a melody track (namely, a performance data track for a melody part). If the electronic musical instrument is a percussion instrument, a drum track may be used as a subject of a music game. Alternatively, a track for a backing part such as a bass or chord part may be used as a subject of a music game.

Further, it should be noted that a character corresponding to a note should not necessarily be moved from the top to the bottom on the display, but may be moved from the bottom to the top, from the left to the right, or from the right to the left. Namely, on a game screen, the image of a performance operator which should be operated may be displayed in any manner with the progress of a piece of music.

Further, it should be noted that the music piece data may be in any desired format, such as: the "event plus relative time" format where the time of occurrence of each performance/note event is represented by a time length from the immediately preceding event; the "event plus absolute time" format where the time of occurrence of each performance/note event is represented by an absolute time within the music piece or a measure thereof; the "pitch (rest) plus note length" format where each performance data is represented by a pitch and length of a note or a rest and a length of the rest; or the "solid" format where a memory region is reserved for each minimum resolution of a performance and each performance/note event is stored in one of the memory regions that corresponds to the time of occurrence of the performance/note event.

It should be noted that as a method of processing music piece data (a method of updating a music game screen), various methods may be used such as a method in which the processing cycle is varied according to the set tempo, a method in which the value of timing data in music piece data is varied according to the set tempo with the processing cycle being fixed, a method in which the way of counting timing data in music piece data per processing is varied according to the tempo with the processing cycle being fixed. Further, sounding based on a note-on/off message should not necessarily be performed by the electronic musical instrument, but may be performed by the game apparatus.

According to the present invention, guide information for use in operating the guide section for the performance operators provided in the electronic musical apparatus is transmitted at timing earlier than timing at which the performance operator should be actually operated, and hence the player can recognize the performance operator, which should be operated, at timing earlier than timing at which the performance operator should be actually operated.

Further, before the execution of a music game, information for prohibiting note-on/off messages generated from the performance operators from being transmitted to the electronic musical apparatus, and hence it is possible to prevent a note-on/off message transmitted from the music game apparatus and a note-on/off message generated from the performance operator of the electronic musical apparatus from being redundantly supplied to the tone generator.

Further, before the execution of a music game, information indicative of an instruction for prohibiting the guide sections of the performance operators from being operated according to note-on/off messages transmitted to the electronic musical apparatus which supports a music game, and hence it is possible to prevent the guide sections of the electronic musical apparatus from responding to note-on/off message transmitted from the music game apparatus.

## Claims

1. A music game system including a music game apparatus (PC) for connection to an electronic musical apparatus (10) including tone generating means (6), performance operators (10A) and performance guide means (10B), said music game apparatus (PC) comprising:
a display (5A);
music piece information supplying means for supplying music piece information;
game executing means for causing said display (5A) to display a given game screen according to the supplied music piece information, the given game screen displaying images of the performance operators (10A) which should be operated in accordance with progress of a piece of music based on the supplied music piece information; and
transmitting means (8) for transmitting, to the electronic musical apparatus, guide information for causing the performance guide means (10B) to indicate to a user a particular performance operator to be operated among the performance operators (10A) in accordance with the supplied music piece information,
**characterized in that** the guide information is transmitted at timing earlier than timing at which the performance operator (10A) should be actually operated,
said transmitting means (8) further transmits, to the electronic musical apparatus, first note information relating to the supplied music piece information, as information separate from the guide information, and
said electronic musical apparatus (10) uses the received guide information in said performance guide means (10B),
wherein said music game apparatus further comprises receiving means for receiving, from the electronic musical apparatus (10), operation related information indicative of an operated performance operator among the performance operators, and
wherein said transmitting means (8) transmits, to the electronic musical apparatus (10), second note information corresponding to said operation related information received by said receiving means, and
further transmits, to the electronic musical apparatus (10), prohibition information for prohibiting said operation related information corresponding to an operation of the performance operators (10A) from being supplied to the tone generator means (6);
and wherein the electronic musical apparatus uses both said first and second received note information for tone generation.

2. A music game system according to claim 1, wherein the music piece information comprises performance information on a plurality of parts, and performance information for a specific one of the plurality of parts is transmitted as the guide information.

3. A music game system according to claim 1 wherein said performance guide means (10B) of said electronic music apparatus (10) indicates a user a particular performance operator to be operated among said performance operators (10A), and
wherein said electronic musical apparatus (10) further comprises:
receiving means for receiving, from said music game apparatus (PC) during execution of a given music game, guide information for causing said performance guide means (10B) to provide a performance guide to indicate a particular performance operator to be operated among said performance operators (10A) in accordance with progress of the musical performance; and
control means for controlling said performance guide means (10B) such that said performance guide means (10B), in accordance with the guide information received by said receiving means, indicates to the user a particular performance operator to be operated,
wherein said receiving means further receives note information from the music game apparatus (PC), as information separate from the guide information, and
wherein said electronic musical apparatus (10) uses the received guide information in said performance guide means (10B) and uses the received note information for tone generation.

4. A music game system according to claim 3, wherein said control means is capable of switching a mode between a mode in which said performance guide means (10B) is operated according to the received guide information and a mode in which said performance guide means (10B) is operated according to the received note information.

5. A music game system according to claim 3, further comprising transmitting means for transmitting, to the music game apparatus (PC), operation related information indicative of an operated performance operator among said performance operators (10A).

6. A music game system according to claim 1, wherein:
said transmitting means (8) further transmits, to the electronic musical apparatus (10), information for generating a musical tone when the music game is executed; and
whereby the tone generator means (6) of the electronic musical apparatus (10) generates a musical tone according to said information for generating the musical tone transmitted by said transmitting means (8).

7. A music game system according to claim 1 wherein said electronic musical apparatus (10) further comprises:
receiving means for receiving said prohibition information from the music game apparatus; and
prohibition control means, when said receiving means receives the prohibition information, for prohibiting the operation related information corresponding to the operation of said performance operators (10A) from being supplied to said tone generator means (6).

8. A music game system according to claim 7, wherein:
said receiving means further receives information, for generating a musical tone, from the music game apparatus (PC); and
said tone generator means (6) generates a musical tone according to the information for generating the musical tone.

9. A music game system according to claim 1 wherein said game executing means causes said display (5A) to display a screen including images of the performance operators (10A) to be operated in accordance with progress of a given music piece to thereby prompt a user to operate the performance operators (10A), and
wherein said transmitting means (8) further transmits, to the electronic musical apparatus (10), information for prohibiting the performance guide means (10B) from providing the performance guide in accordance with note information other than the guide information.

10. A music game system according to claim 1 wherein said electronic musical apparatus (10) further comprises:
receiving means for receiving, from said music game apparatus (PC) during execution of a music game, guide information for causing said performance guide means (10B) to provide a performance guide to indicate a particular performance operator (10A) to be operated and information for prohibiting said performance guide means (10B) from providing the performance guide in accordance with note information other than the guide information; and
control means for controlling said performance guide means such that said performance guide means (10B) is prohibited from providing the performance guide in accordance with the note information other than the guide information when the information for prohibiting is received, and that said performance guide means (10B), in accordance with the guide information received by said receiving means, indicate to the user a particular performance operator (10A) to be operated.

11. A music game system according to claim 10, wherein, in an initial state, said performance guide means (10B) is set to a mode in which said performance guide means (10B) provides the performance guide in accordance with note information other than the guide information, and wherein, when the information for prohibiting is received during execution of the music game, said performance guide means (10B) is prohibited from providing the performance guide in accordance with the note information other than the guide information.

12. A method of controlling a music game system including a music game apparatus (PC) for connection to an electronic musical apparatus (10) including performance operators (10A) and performance guide means (10B), said method comprising the steps of controlling said music game apparatus (PC), said steps of controlling said music game apparatus (PC) comprising:
a step of executing a music game, the music game being configured such that a screen including images of the performance operators which should be operated in accordance with progress of a given music piece is displayed on a display (5A) to prompt a user to operate the performance operators (10A);
a step of transmitting, to the electronic musical apparatus (10), guide information for causing the performance guide means (10B) to indicate to the user a particular performance operator to be operated among the performance operators (10A) in accordance with the progress of the given music piece,
**characterized in that** said guide information is transmitted at timing earlier than timing at which the performance operator (10A) should be actually operated; and **in that** said steps further comprises:
a step of transmitting, to the electronic musical apparatus (10), first note information relating to the supplied music piece information, as information separate from the guide information;
a step of receiving from the electronic musical apparatus (10), operation related information indicative of an operated performance operator among the performance operators, and
a step of transmitting, from the music game apparatus (PC) to the electronic musical apparatus (10), second note information corresponding to said operation related information received in said step of receiving and further transmitting, from the music game apparatus (PC) to the electronic musical apparatus (10), prohibition information for prohibiting operation related information corresponding to an operation of the performance operators (10A) from being supplied to tone generator means (6) of said electronic musical apparatus (10),
wherein said electronic musical apparatus (10) uses the received guide information in said performance guide means (10B) and uses both the first received note information and the second received note information for tone generation.

13. A method according to claim 12, which further comprises the steps of controlling said electronic musical apparatus (10), said steps of controlling said electronic musical apparatus (10) comprising:
a step of receiving, from said music game apparatus (PC) during execution of a given music game, guide information for causing said performance guide means (10B) to provide a performance guide to indicate a particular performance operator to be operated among the performance operators (10A) in accordance with the progress of the given music piece;
a step of controlling the performance guide means (10B) such that the performance guide means (10B), in accordance with the guide information received by said step of receiving, indicates to the user a particular performance operator to be operated; and
a step of receiving note information from the music game apparatus (PC), as information separate from guide information, the received note information being used for tone generation.

14. A method according to claim 12, which further comprises the steps of controlling said electronic musical apparatus (10), said steps of controlling said electronic musical apparatus (10) comprising:
a step of receiving the prohibition information from the music game apparatus (PC); and
a step of prohibiting the performance operation related information corresponding to an operation of the performance operators (10A) from being supplied to tone generator means (6) of said electronic musical apparatus (10) when the prohibition information is received.

15. A method according to claim 12 which further comprises a step of transmitting, from the music game apparatus (PC) to the electronic musical apparatus (10), information for prohibiting the performance guide means (10B) from providing the performance guide in accordance with note information other than the guide information.

16. A method according to claim 12, which further comprises the steps of controlling said electronic musical apparatus (10), said steps of controlling said electronic musical apparatus (10) comprising:
a step of receiving, from the music game apparatus (PC) during execution of a music game, guide information for causing the performance guide means (10B) to provide a performance guide to indicate a particular performance operator to be operated among the performance operators (10A) and information for prohibiting the performance guide means (10B) from providing the performance guide in accordance with note information other than the guide information; and
a step of controlling the performance guide means (10B) such that the performance guide means (10B) is prohibited from providing the performance guide in accordance with the note information other than the guide information when the information for prohibiting is received, and that said performance guide means (10B), in accordance with the guide information received by said receiver, indicate to the user a particular performance operator (10A) to be operated.

## Patentansprüche

1. Musikspielsystem, das eine Musikspielvorrichtung (PC) aufweist, zur Verbindung mit einer elektronischen Musikvorrichtung (10), die ein Tongeneratormittel (6), Ausführungsbetätigungselemente (10A) und ein Ausführungsanleitungsmittel (10B) aufweist, wobei die Musikspielvorrichtung (PC) umfasst:
eineAnzeige (5A);
ein Musikstückinformationsliefermittel zum Liefern von Musikstückinformationen;
ein Spieldurchführungsmittel, um die Anzeige (5A) dazu zu veranlassen, einen bestimmten Spielbildschirm gemäß den gelieferten Musikstückinformationen anzuzeigen, wobei der bestimmte Spielbildschirm Bilder der Ausführungsbetätigungselemente (10A) anzeigt, die gemäß dem Fortschreiten eines Musikstücks auf der Grundlage der gelieferten Musikstückinformationen betätigt werden sollten; und
ein Übertragungsmittel (8) zum Übertragen von Anleitungsinformationen an die elektronische Musikvorrichtung, um das Ausführungsanleitungsmittel (10B) dazu zu veranlassen, einem Benutzer ein bestimmtes Ausführungsbetätigungselement anzuzeigen, das gemäß den gelieferten Musikstückinformationen unter den Ausführungsbetätigungselementen (10A) zu betätigen ist,
**dadurch gekennzeichnet, dass** die Anleitungsinformationen zu einer Zeit übertragen werden, die früher als eine Zeit ist, zu der das Ausführungsbetätigungselement (10A) tatsächlich betätigt werden sollte,
das Übertragungsmittel (8) ferner erste Noteninformationen, die sich auf die gelieferten Musikstückinformationen beziehen, als von den Anleitungsinformationen getrennte Informationen an die elektronische Musikvorrichtung überträgt, und
die elektronische Musikvorrichtung (10) die empfangenen Anleitungsinformationen in dem Ausführungsanleitungsmittel (10B) verwendet,
wobei die Musikspielvorrichtung ferner ein Empfangsmittel zum Empfangen von auf die Betätigung bezogenen Informationen von der elektronischen Musikvorrichtung (10) aufweist, die ein betätigtes Ausführungsbetätigungselement unter den Ausführungsbetätigungselementen angeben, und
wobei das Übertragungsmittel (8) zweite Noteninformationen, die den auf die Betätigung bezogenen Informationen entsprechen, die von dem Empfangsmittel empfangen wurden, an die elektronische Musikvorrichtung (10) überträgt, und
ferner Verhinderungsinformationen, die verhindern, dass die einer Betätigung der Ausführungsbetätigungselemente (10A) entsprechenden auf eine Betätigung bezogenen Informationen an das Tongeneratormittel (6) geliefert werden, an die elektronische Musikvorrichtung (10) überträgt;
und wobei die elektronische Musikvorrichtung sowohl die ersten als auch die zweiten empfangenen Noteninformationen zur Tonerzeugung verwendet.

2. Musikspielsystem gemäß Anspruch 1, wobei die Musikstückinformationen Ausführungsinformationen über eine Vielzahl von Stimmen umfassen, und Ausführungsinformationen für eine Spezifische der Vielzahl von Stimmen als die Anleitungsinformationen übertragen werden.

3. Musikspielsystem gemäß Anspruch 1, wobei das Ausführungsanleitungsmittel (10B) der elektronischen Musikvorrichtung (10) einem Benutzer ein bestimmtes Ausführungsbetätigungselement anzeigt, das unter den Ausführungsbetätigungselementen (10A) zu bedienen ist, und
wobei die elektronische Musikvorrichtung (10) ferner umfasst:
ein Empfangsmittel zum Empfangen von Anleitungsinformationen von der Musikspielvorrichtung (PC) während der Durchführung eines bestimmten Musikspiels, um das Ausführungsanleitungsmittel (10B) dazu zu veranlassen, eine Ausführungsanleitung zu geben, um ein bestimmtes Ausführungsbetätigungselement anzuzeigen, das gemäß dem Fortschreiten der Musikausführung unter den Ausführungsbetätigungselementen (10A) zu betätigen ist; und
ein Steuermittel zum Steuern des Ausführungsanleitungsmittels (10B), so dass das Ausführungsanleitungsmittel (10B) gemäß den von dem Empfangsmittel empfangenen Anleitungsinformationen dem Benutzer ein bestimmtes zu betätigendes Ausführungsbetätigungselement anzeigt,
wobei das Empfangsmittel ferner Noteninformationen als von den Anleitungsinformationen getrennte Informationen von der Musikspielvorrichtung (PC) empfängt, und
wobei die elektronische Musikvorrichtung (10) die empfangenen Anleitungsinformationen in dem Ausführungsanleitungsmittel (10B) verwendet und die empfangenen Noteninformationen zur Tonerzeugung verwendet.

4. Musikspielsystem gemäß Anspruch 3, wobei das Steuerungsmittel dazu fähig ist, eine Betriebsart zwischen einer Betriebsart, in der das Ausführungsanleitungsmittel (10B) gemäß den empfangenen Anleitungsinformationen betätigt wird, und einer Betriebsart, in der das Ausführungsanleitungsmittel (10B) gemäß den empfangenen Noteninformationen betätigt wird, hin und her zu schalten.

5. Musikspielsystem gemäß Anspruch 3, ferner aufweisend ein Übertragungsmittel zum Übertragen von auf die Betätigung bezogenen Informationen, die ein betätigtes Ausführungsbetätigungselement unter den Ausführungsbetätigungselementen (10A) angeben, an die Musikspielvorrichtung (PC).

6. Musikspielsystem gemäß Anspruch 1, wobei:
das Übertragungsmittel (8) ferner Informationen zum Erzeugen eines Musiktons an die elektronische Musikvorrichtung (10) überträgt, wenn das Musikspiel durchgeführt wird; und
wodurch das Tongeneratormittel (6) der elektronischen Musikvorrichtung (10) gemäß den von dem Übertragungsmittel (8) übertragenen Informationen zum Erzeugen des Musiktons einen Musikton erzeugt.

7. Musikspielsystem gemäß Anspruch 1, wobei die elektronische Musikvorrichtung (10) ferner aufweist:
ein Empfangsmittel zum Empfangen der Verhinderungsinformationen von der Musikspielvorrichtung; und
ein Verhinderungssteuerungsmittel zum Verhindern, dass die auf die Betätigung bezogenen Informationen, die der Betätigung der Ausführungsbetätigungselemente (10A) entsprechen, an das Tongeneratormittel (6) geliefert werden, wenn das Empfangsmittel die Verhinderungsinformationen empfängt.

8. Musikspielsystem gemäß Anspruch 7, wobei:
das Empfangsmittel ferner Informationen zum Erzeugen eines Musiktons von der Musikspielvorrichtung (PC) empfängt; und
das Tongeneratormittel (6) einen Musikton gemäß den Informationen zum Erzeugen des Musiktons erzeugt.

9. Musikspielsystem gemäß Anspruch 1, wobei das Spieldurchführungsmittel die Anzeige (5A) dazu veranlasst, einen Bildschirm mit Bildern der Ausführungsbetätigungselemente (10A) anzuzeigen, die gemäß dem Fortschreiten eines bestimmten Musikstücks zu betätigen sind, um **dadurch** einen Benutzer aufzufordern, die Ausführungsbetätigungselemente (10A) zu betätigen, und
wobei das Übertragungsmittel (8) ferner Informationen zum Verhindern, dass das Ausführungsanleitungsmittel (10B) die Ausführungsanleitung gemäß Noteninformationen liefert, die nicht die Anleitungsinformationen sind, an die elektronische Musikvorrichtung (10) überträgt.

10. Musikspielsystem gemäß Anspruch 1, wobei die elektronische Musikvorrichtung (10) ferner aufweist:
ein Empfangsmittel zum Empfangen von Anleitungsinformationen von der Musikspielvorrichtung (PC) während der Durchführung des Musikspiels, um zu veranlassen, dass das Ausführungsanleitungsmittel (10B) eine Ausführungsanleitung zum Anzeigen eines bestimmten zu betätigenden Ausführungsbetätigungselements (10A) sowie Informationen liefert, um zu verhindern, dass das Ausführungsanleitungsmittel (10B) die Ausführungsanleitung gemäß Noteninformationen liefert, die nicht die Anleitungsinformationen sind; und
ein Steuerungsmittel zum Steuern des Ausführungsanleitungsmittels, so dass das Ausführungsanleitungsmittel (10B) daran gehindert wird, die Ausführungsanleitung gemäß den Noteninformationen, die nicht die Anleitungsinformationen sind, zu liefern, wenn die Informationen zum Verhindern empfangen werden, und dass das Ausführungsanleitungsmittel (10B) gemäß den von dem Empfangsmittel empfangenen Anleitungsinformationen dem Benutzer ein bestimmtes zu betätigendes Ausführungsbetätigungselement (10A) anzeigt.

11. Musikspielsystem gemäß Anspruch 10, wobei in einem Anfangszustand das Ausführungsanleitungsmittel (10B) in eine Betriebsart eingestellt ist, in der das Ausführungsanleitungsmittel (10B) die Ausführungsanleitung gemäß Noteninformationen liefert, die nicht die Anleitungsinformationen sind, und wobei, wenn die Informationen zum Verhindern während der Durchführung des Musikspiels empfangen werden, das Ausführungsanleitungsmittel (10B) daran gehindert wird, die Ausführungsanleitung gemäß den Noteninformationen zu liefern, die nicht die Anleitungsinformationen sind.

12. Verfahren zum Steuern eines Musikspielsystems, das eine Musikspielvorrichtung (PC) zum Verbindung mit einer elektronischen Musikvorrichtung (10) aufweist, die Ausführungsbetätigungselemente (10A) und ein Ausführungsanleitungsmittel (10B) aufweist, wobei das Verfahren die Schritte zum Steuern der Musikspielvorrichtung (PC) aufweist, wobei die Schritt zum Steuern der Musikspielvorrichtung (PC) aufweisen:
einen Schritt zum Durchführen eines Musikspiels, wobei das Musikspiel so konfiguriert ist, dass ein Bildschirm, der Bilder der Ausführungsbetätigungselemente enthält, die gemäß dem Fortschreiten eines bestimmten Musikstücks betätigt werden sollten, auf einer Anzeige (5A) angezeigt wird, um einen Benutzer aufzufordern, die Ausführungsbetätigungselemente (10A) zu betätigen;
einen Schritt zum Übertragen von Anleitungsinformationen an die elektronische Musikvorrichtung (10), um das Ausführungsanleitungsmittel (10B) dazu zu veranlassen, einem Benutzer ein bestimmtes Ausführungsbetätigungselement anzuzeigen, das gemäß dem Fortschreiten des bestimmen Musikstücks unter den Ausführungsbetätigungselementen (10A) zu betätigen ist,
**dadurch gekennzeichnet, dass** die Anleitungsinformationen zu einer Zeit übertragen werden, die früher als eine Zeit ist, zu der das Ausführungsbetätigungselement (10A) tatsächlich betätigt werden sollte; und **dadurch**, dass die Schritte ferner aufweisen:
einen Schritt zum Übertragen erster Noteninformationen, die sich auf die gelieferten Musikstückinformationen beziehen, als von den Anleitungsinformationen getrennte Informationen an die elektronische Musikvorrichtung (10), und
einen Schritt zum Empfangen von auf die Betätigung bezogenen Informationen, die ein betätigtes Ausführungsbetätigungselement unter den Ausführungsbetätigungselementen angeben, von der elektronischen Musikvorrichtung (10), und
einen Schritt zum Übertragen zweiter Noteninformationen, die den auf die Betätigung bezogenen Informationen entsprechen, die in dem Schritt zum Empfangen empfangen wurden, von der Musikspielvorrichtung (PC) an die elektronische Musikvorrichtung (10), und ferner zum Übertragen von Verhinderungsinformationen, die verhindern, dass die einer Betätigung der Ausführungsbetätigungselemente (10A) entsprechenden auf eine Betätigung bezogenen Informationen an das Tongeneratormittel (6) der elektronischen Musikvorrichtung (10) geliefert werden, von der Musikspielvorrichtung (PC) an die elektronische Musikvorrichtung (10);
wobei die elektronische Musikvorrichtung (10) die empfangenen Anleitungsinformationen in dem Ausführungsanleitungsmittel (10B) verwendet und sowohl die ersten empfangenen Noteninformationen als auch die zweiten empfangenen Noteninformationen zur Tonerzeugung verwendet.

13. Verfahren gemäß Anspruch 12, das ferner die Schritte des Steuerns der elektronischen Musikvorrichtung (10) aufweist, wobei die Schritte zum Steuern der elektronischen Musikvorrichtung (10) aufweisen:
einen Schritt zum Empfangen von Anleitungsinformationen von der Musikspielvorrichtung (PC) während der Durchführung eines bestimmten Musikspiels, um das Ausführungsanleitungsmittel (10B) dazu zu veranlassen, eine Ausführungsanleitung zu geben, um ein bestimmtes Ausführungsbetätigungselement anzuzeigen, das gemäß dem Fortschreiten des Musikspiels unter den Ausführungsbetätigungselementen (10A) zu betätigen ist;
einen Schritt zum Steuern des Ausführungsanleitungsmittels (10B), so dass das Ausführungsanleitungsmittel (10B) gemäß den von dem Schritt zum Empfangen empfangenen Anleitungsinformationen dem Benutzer ein bestimmtes zu betätigendes Ausführungsbetätigungselement anzeigt, und
einen Schritt zum Empfangen von Noteninformationen als von den Anleitungsinformationen getrennte Informationen von der Musikspielvorrichtung (PC), wobei die empfangenen Noteninformationen zur Tonerzeugung verwendet werden.

14. Verfahren gemäß Anspruch 12, das ferner die Schritte des Steuerns der elektronischen Musikvorrichtung (10) aufweist, wobei die Schritte zum Steuern der elektronischen Musikvorrichtung (10) aufweisen:
einen Schritt zum Empfangen der Verhinderungsinformationen von der Musikspielvorrichtung (PC); und
einen Schritt zum Verhindern, dass die auf die Betätigung bezogenen Informationen, die der Betätigung der Ausführungsbetätigungselemente (10A) entsprechen, an das Tongeneratormittel (6) der elektronischen Musikvorrichtung (10) geliefert werden, wenn die Verhinderungsinformationen empfangen werden.

15. Verfahren gemäß Anspruch 12, das ferner einen Schritt zum Übertragen von Informationen zum Verhindern, dass das Ausführungsanleitungsmittel (10B) die Ausführungsanleitung gemäß Noteninformationen liefert, die nicht die Anleitungsinformationen sind, von der Musikspielvorrichtung (PC) an die elektronische Musikvorrichtung (10) aufweist.

16. Verfahren gemäß Anspruch 12, das ferner die Schritte des Steuerns der elektronischen Musikvorrichtung (10) aufweist, wobei die Schritte zum Steuern der elektronischen Musikvorrichtung (10) aufweisen:
einen Schritt zum Empfangen von Anleitungsinformationen von der Musikspielvorrichtung (PC) während der Durchführung eines Musikspiels, um zu veranlassen, dass das Ausführungsanleitungsmittel (10B) eine Ausführungsanleitung zum Anzeigen eines bestimmten unter den Ausführungsbetätigungselementen (10A) zu betätigenden Ausführungsbetätigungselements (10A) sowie Informationen liefert, um zu verhindern, dass das Ausführungsanleitungsmittel (10B) die Ausführungsanleitung gemäß Noteninformationen liefert, die nicht die Anleitungsinformationen sind; und
einen Schritt zum Steuern des Ausführungsanleitungsmittels (10B), so dass das Ausführungsanleitungsmittel (10B) daran gehindert wird, die Ausführungsanleitung gemäß den Noteninformationen, die nicht die Anleitungsinformationen sind, zu liefern, wenn die Informationen zum Verhindern empfangen werden, und dass das Ausführungsanleitungsmittel (10B) gemäß den von dem Empfänger empfangenen Anleitungsinformationen dem Benutzer ein bestimmtes zu betätigendes Ausführungsbetätigungselement (10A) anzeigt.

## Revendications

1. Système de jeu musical incluant un appareil de jeu musical (PC) pour une connexion à un appareil musical électronique (10) incluant un moyen de génération de tonalité (6), des opérateurs de performance (10A) et un moyen de guidage de performance (10B), ledit appareil de jeu musical (PC) comprenant :
un affichage (5A) ;
un moyen de fourniture d'informations de morceaux de musique pour fournir des informations de morceaux de musique ;
un moyen d'exécution de jeu pour amener ledit affichage (5A) à afficher un écran de jeu donné selon les informations de morceaux de musique fournies, l'écran de jeu donné affichant des images des opérateurs de performance (10A) qui doivent être exécutées en conformité avec la progression d'un morceau de musique d'après les informations de morceaux de musique fournies ; et
un moyen de transmission (8) pour transmettre à l'appareil musical électronique des informations de guidage pour amener le moyen de guidage de performance (10B) à indiquer à un utilisateur un opérateur de performance particulier à exécuter parmi les opérateurs de performance (10A) en conformité avec les informations de morceaux de musique fournies,
**caractérisé en ce que** les informations de guidage sont transmises à un moment antérieur au moment auquel l'opérateur de performance (10A) doit être effectivement exécuté,
ledit moyen de transmission (8) transmet en outre à l'appareil musical électronique des premières informations de note associées aux informations de morceaux de musique fournies, sous forme d'informations séparées des informations de guidage, et
ledit appareil musical électronique (10) utilise les informations de guidage reçues dans ledit moyen de guidage de performance (10B),
dans lequel ledit appareil de jeu musical comprend en outre un moyen de réception pour recevoir, de l'appareil musical électronique (10), des informations relatives à l'exécution indiquant un opérateur de performance exécuté parmi les opérateurs de performance, et
dans lequel ledit moyen de transmission (8) transmet à l'appareil musical électronique (10) des secondes informations de note correspondant auxdites informations relatives à l'exécution reçues par ledit moyen de réception, et
transmet en outre à l'appareil musical électronique (10) des informations d'interdiction pour interdire la fourniture desdites opérations relatives à l'exécution correspondant à une exécution des opérateurs de performance (10A) au moyen générateur de tonalités (6) ;
et où l'appareil musical électronique utilise à la fois lesdites premières et secondes informations de note reçues pour la génération de tonalités.

2. Système de jeu musical selon la revendication 1, dans lequel les informations de morceaux de musique comprennent des informations de performance sur une pluralité de parties, et des informations de performance pour une partie spécifique de la pluralité de parties sont transmises en tant qu'informations de guidage.

3. Système de jeu musical selon la revendication 1, dans lequel ledit moyen de guidage de performance (10B) dudit appareil musical électronique (10) indique à un utilisateur un opérateur de performance particulier à exécuter parmi lesdits opérateurs de performance (10A), et
dans lequel ledit appareil musical électronique (10) comprend en outre :
un moyen de réception pour recevoir dudit appareil de jeu musical (PC) pendant l'exécution d'un jeu de musique donné, des informations de guidage pour amener ledit moyen de guidage de performance (10B) à assurer un guidage de performance pour indiquer un opérateur de performance particulier à exécuter parmi lesdits opérateurs de performance (10A) en conformité avec la progression de la performance musicale ; et
un moyen de commande pour commander ledit moyen de guidage de performance (10B) de sorte que ledit moyen de guidage de performance (10B), en conformité avec les informations de guidage reçues par ledit moyen de réception, indique à l'utilisateur un opérateur de performance particulier à exécuter,
dans lequel ledit moyen de réception reçoit en outre des informations de note de l'appareil de jeu musical (PC), sous forme d'informations séparées des informations de guidage, et
dans lequel ledit appareil musical électronique (10) utilise les informations de guidage reçues dans ledit moyen de guidage de performance (10B) et utilise les informations de note reçues pour la génération de tonalités.

4. Système de jeu musical selon la revendication 3, dans lequel ledit moyen de commande est capable de permuter un mode entre un mode dans lequel ledit moyen de guidage de performance (10B) est exécuté selon les informations de guidage reçues et un mode dans lequel ledit moyen de guidage de performance (10B) est exécuté selon les informations de note reçues.

5. Système de jeu musical selon la revendication 3, comprenant en outre un moyen de transmission pour transmettre à l'appareil de jeu musical (PC) des informations relatives à l'exécution indiquant un opérateur de performance exécuté parmi lesdits opérateurs de performance (10A).

6. Système de jeu musical selon la revendication 1, dans lequel :
ledit moyen de transmission (8) transmet en outre à l'appareil musical électronique (10) des informations pour générer une tonalité musicale lorsque le jeu musical est exécuté ; et
par lequel le moyen générateur de tonalités (6) de l'appareil musical électronique (10) génère une tonalité musicale selon lesdites informations pour générer la tonalité musicale transmise par ledit moyen de transmission (8).

7. Système de jeu musical selon la revendication 1, dans lequel ledit appareil musical électronique (10) comprend en outre :
un moyen de réception pour recevoir lesdites informations d'interdiction de l'appareil de jeu musical ; et
un moyen de commande d'interdiction, lorsque ledit moyen de réception reçoit les informations d'interdiction, pour interdire la fourniture des informations associées à l'exécution correspondant à l'exécution desdits opérateurs de performance (10A) audit moyen générateur de tonalités (6).

8. Système de jeu musical selon la revendication 7, dans lequel :
ledit moyen de réception reçoit en outre des informations, pour générer une tonalité musicale, de l'appareil de jeu musical (PC) ; et
ledit moyen générateur de tonalités (6) génère une tonalité musicale selon les informations pour générer la tonalité musicale.

9. Système de jeu musical selon la revendication 1, dans lequel ledit moyen d'exécution de jeu amène ledit affichage (5A) à afficher un écran incluant des images des opérateurs de performance (10A) à exécuter en conformité avec la progression d'un morceau de musique donné pour ainsi inciter un utilisateur à exécuter les opérateurs de performance (10A), et
où ledit moyen de transmission (8) transmet en outre à l'appareil musical électronique (10) des informations pour interdire la fourniture du guidage de performance en conformité avec des informations de note autres que des informations de guidage par le moyen de guidage de performance (10B).

10. Système de jeu musical selon la revendication 1, dans lequel ledit appareil musical électronique (10) comprend en outre :
un moyen de réception pour recevoir dudit appareil de jeu musical (PC) pendant l'exécution d'un jeu musical, des informations de guidage pour amener ledit moyen de guidage de performance (10B) à assurer un guidage de performance pour indiquer un opérateur de performance particulier (10A) à exécuter et des informations pour interdire la fourniture du guidage de performance en conformité avec des informations de note autres que des informations de guidage par ledit moyen de guidage de performance (10B) ; et
un moyen de commande pour commander ledit moyen de guidage de performance de sorte qu'il soit interdit audit moyen de guidage de performance (10B) d'assurer le guidage de performance en conformité avec des informations de note autres que les informations de guidage lorsque les informations d'interdiction sont reçues, et ledit moyen de guidage de performance (10B), en conformité avec les informations de guidage reçues par ledit moyen de réception, indique à l'utilisateur un opérateur de performance particulier (10A) à exécuter.

11. Système de jeu musical selon la revendication 10, dans lequel, dans un état initial, ledit moyen de guidage de performance (10B) est réglé sur un mode dans lequel ledit moyen de guidage de performance (10B) assure le guidage de performance en conformité avec des informations de note autres que les informations de guidage, et où, lorsque les informations d'interdiction sont reçues pendant l'exécution du jeu musical, il est interdit audit moyen de guidage de performance (10B) d'assurer le guidage de performance en conformité avec des informations de note autres que les informations de guidage.

12. Procédé de commande d'un système de jeu musical incluant un appareil de jeu musical (PC) pour une connexion à un appareil musical électronique (10) incluant des opérateurs de performance (10A) et un moyen de guidage de performance (10B), ledit procédé comprenant les étapes consistant à commander ledit appareil de jeu musical (PC), lesdites étapes consistant à commander ledit appareil de jeu musical (PC) comprenant :
une étape consistant à exécuter un jeu musical, le jeu musical étant configuré de sorte qu'un écran incluant des images des opérateurs de performance qui doivent être exécutées en conformité avec la progression d'un morceau de musique donné soit affiché sur un affichage (5A) pour inciter un utilisateur à exécuter les opérateurs de performance (10A) ;
une étape consistant à transmettre à l'appareil musical électronique (10) des informations de guidage pour amener le moyen de guidage de performance (10B) à indiquer à l'utilisateur un opérateur de performance particulier à exécuter parmi les opérateurs de performance (10A) en conformité avec la progression du morceau de musique donné,
**caractérisé en ce que** lesdites informations de guidage sont transmises à un moment antérieur au moment auquel l'opérateur de performance (10A) à exécuter doit être effectivement exécuté ; et **en ce que** lesdites étapes comprennent en outre :
une étape consistant à transmettre à l'appareil musical électronique (10) des premières informations de note associées aux informations de morceaux de musique fournies, sous forme d'informations séparées des informations de guidage ;
une étape consistant à recevoir de l'appareil musical électronique (10) des informations associées à l'exécution indiquant un opérateur de performance exécuté parmi les opérateurs de performance, et
une étape consistant à transmettre de l'appareil de jeu musical (PC) à l'appareil musical électronique (10) des secondes informations de note correspondant auxdites informations associées à l'exécution reçues dans ladite étape consistant à recevoir puis à transmettre, de l'appareil de jeu musical (PC) à l'appareil musical électronique (10), des informations d'interdiction pour interdire la fourniture d'informations associées à l'exécution correspondant à une exécution des opérateurs de performance (10A) au moyen générateur de tonalités (6) dudit appareil musical électronique (10),
dans lequel ledit appareil musical électronique (10) utilise les informations de guidage reçues dans ledit moyen de guidage de performance (10B) et utilise à la fois les premières informations de note reçues et les secondes informations de note reçues pour la génération de tonalités.

13. Procédé selon la revendication 12, qui comprend en outre les étapes consistant à commander ledit appareil musical électronique (10), lesdites étapes consistant à commander ledit appareil musical électronique (10) comprenant :
une étape consistant à recevoir dudit appareil de jeu musical (PC) pendant l'exécution d'un jeu musical donné, des informations de guidage pour amener ledit moyen de guidage de performance (10B) à assurer un guidage de performance pour indiquer un opérateur de performance particulier à exécuter parmi les opérateurs de performance (10A) en conformité avec la progression du morceau de musique donné ;
une étape consistant à commander le moyen de guidage de performance (10B) de sorte que le moyen de guidage de performance (10B), conformément aux informations de guidage reçues par ladite étape de réception, indique à l'utilisateur un opérateur de performance particulier à exécuter ; et
une étape consistant à recevoir des informations de note de l'appareil de jeu musical (PC), sous forme d'informations séparées d'informations de guidage, les informations de note reçues étant utilisées pour la génération de tonalités.

14. Procédé selon la revendication 12, qui comprend en outre les étapes consistant à commander ledit appareil musical électronique (10), lesdites étapes consistant à commander ledit appareil musical électronique (10) comprenant :
une étape consistant à recevoir les informations d'interdiction de l'appareil de jeu musical (PC) ; et
une étape consistant à interdire la fourniture d'informations associées à l'exécution de performance correspondant à une exécution des opérateurs de performance (10A) au moyen générateur de tonalités (6) dudit appareil musical électronique (10) lorsque les informations d'interdiction sont reçues.

15. Procédé selon la revendication 12, qui comprend en outre une étape consistant à transmettre de l'appareil de jeu musical (PC) à l'appareil musical électronique (10), des informations pour interdire la fourniture du guidage de performance en conformité avec des informations de note autres que des informations de guidage par le moyen de guidage de performance (10B).

16. Procédé selon la revendication 12, qui comprend en outre les étapes consistant à commander ledit appareil musical électronique (10), lesdites étapes consistant à commander ledit appareil musical électronique (10) comprenant :
une étape consistant à recevoir dudit appareil de jeu musical (PC) pendant l'exécution d'un jeu musical, des informations de guidage pour amener le moyen de guidage de performance (10B) à assurer un guidage de performance pour indiquer un opérateur de performance particulier à exécuter parmi les opérateurs de performance (10A) et des informations pour interdire la fourniture du guidage de performance en conformité avec des informations de note autres que des informations de guidage par le moyen de guidage de performance (10B) ; et
une étape consistant à commander le moyen de guidage de performance (10B) de sorte qu'il soit interdit au moyen de guidage de performance (10B) d'assurer le guidage de performance en conformité avec les informations de note autres que les informations de guidage lorsque les informations d'interdiction sont reçues, et que ledit moyen de guidage de performance (10B), en conformité avec les informations de guidage reçues par ledit récepteur, indique à l'utilisateur un opérateur de performance particulier (10A) à exécuter.
